# EUROPEAN PATENT SPECIFICATION

(11) **EP 2 557 617 B1**
(45) Date of publication and mention of the grant of the patent: **14.05.2014**
(21) Application number: 12179917.5
(22) Date of filing: 09.08.2012
(51) Int. Cl.: H01M 4/134, H01M 10/0525, H01M 4/36, H01M 4/38, H01M 4/66, H01M 4/04, H01M 4/1395, H01M 4/02

(54) **Lithium secondary battery and anode therefor**
Lithium-Sekundärbatterie und Anode dafür
Batterie secondaire au lithium et son anode

(30) Priority: 09.08.2011 JP 2011173808
(43) Date of publication of application: 13.02.2013
(73) Proprietor: Nitto Denko Corporation, Ibaraki-shi, Osaka 567-8680 (JP)
(72) Inventor: Uetani, Yoshihiro, Ibaraki-shi Osaka 567-8680 (JP); Kajisa, Yuki, Ibaraki-shi Osaka 567-8680 (JP); Nakamura, Koki, Ibaraki-shi Osaka 567-8680 (JP); Takemura, Keiji, Ibaraki-shi Osaka 567-8680 (JP)
(74) Representative: Jackson, Martin Peter

(56) References cited:
- EP-A1- 2 432 057
- JP-A- 2003 157 833
- JP-A- 2004 220 871
- JP-A- 2007 087 789
- JP-A- 2007 250 510
- JP-A- 2009 283 248
- US-A1- 2002 064 704
- US-A1- 2005 058 906
- ZHANG ET AL: "NixCu6-xSn5 alloys as negative electrode materials for rechargeable lithium batteries", JOURNAL OF POWER SOURCES, ELSEVIER SA, CH, vol. 167, no. 1, 4 April 2007 (2007-04-04) , pages 171-177, XP022016392, ISSN: 0378-7753, DOI: 10.1016/J.JPOWSOUR.2007.02.012

## Description

The present invention relates to an anode of a lithium secondary battery, and a lithium secondary battery. The present invention also relates to a sheet useful for producing an anode of a lithium secondary battery (i.e., sheet for anode of lithium secondary battery).

An anode of a lithium secondary battery comprises a current collector (e.g., copper foil) and an active material layer laminated on the current collector. As such active material, various materials have been proposed heretofore. For example, JP-A-2004-103474 describes an anode active material having one or more kinds of the 11, 12, 13, 14 and 15 group elements. In addition, JP-A-H11-233116 describes a metal to be alloyed with lithium as an anode active material.

Zhang et al: "NixCu6-xSn5 alloys as negative electrode materials for rechargeable lithium batteries" Journal of Power Sources 167 (2007) 171-177 discloses a series of Ni doped NiₓCu₆-ₓSn₅ (x=0,0.5,1,2,4) alloys.

The performance of an anode of conventional lithium secondary batteries to prevent decrease of the charge and discharge capacity due to repeated charge and discharge cycle (hereinafter abbreviated as "charge-discharge cycle characteristics") is not sufficient. It is therefore an aim of the present invention to provide an anode of a lithium secondary battery, which can achieve a charge-discharge cycle characteristics superior to that of the prior art.

According to the present invention, there is provided an anode or a sheet for an anode for a lithium secondary battery as defined in the independent claim.

In the following, the "layer comprised of NiₓCu₆₋ₓSn₅" and "layer comprised of Cu₃Sn" are sometimes to be abbreviated as "NiₓCu₆₋ₓSn₅ layer" and "Cu₃Sn layer", respectively.

In addition, in the present invention, the "opening of the active material layer" means a part free of an active material, and the "shape of the opening in a planar view" means a shape of the opening when the active material layer is seen from the perpendicular direction. Moreover, a "network structure having an opening" in the active material layer means that, when the active material layer is seen from the perpendicular direction, plural openings are regularly aligned, and the periphery of the individual openings form a part covering the current collector layer (part where active material is present).

Using the anode of the present invention, a lithium secondary battery superior in the charge-discharge cycle characteristics can be produced.

The present invention will be described by way of example with reference to the accompanying drawings, in which:-

Fig. 1 (A) is a schematic plane view of the main part of the anode of the lithium secondary battery in preferable embodiment of the present invention, and Fig. 1 (B) is a schematic sectional view along the line Ib-Ib of Fig. 1 (A) ;
Fig. 2 (A) is a schematic plane view of the main part of the anode of the lithium secondary battery in an example, useful for an understanding of the present invention, and Fig. 2 (B) is a schematic sectional view along the line IIb-IIb of Fig. 2 (A) ; and
Fig. 3 is a schematic plane view of the photomask used in Examples 1 - 4 and Comparative Examples 1 and 2.

In the Figures, 1 is a current collector layer, 2 is an active material layer, 2A is an opening, 2B is a covering part, 3 is a light transmitting part, 4 is a light shield, and 10 is an anode.

The present invention relates to an anode of a lithium secondary battery and a sheet for the anode. In the present invention, "a sheet for an anode of a lithium secondary battery" is a sheet used for producing "an anode of a lithium secondary battery", and "an anode of a lithium secondary battery" can be produced by cutting or punching out this sheet in a desired size. In the following description, therefore, "anode" is used to show a concept encompassing an anode of a lithium secondary battery and a sheet for the anode, unless particularly specified.

The anode of the present invention has a current collector layer and an active material layer laminated on the current collector layer, wherein the active material layer has an NiₓCu₆₋ₓSn₅ layer (x is 0.30 - 2.0). The active material layer may be formed only on one surface of the current collector layer, or may be formed on both surfaces of the current collector layer.

The superior charge-discharge cycle characteristic of the anode of the present invention is considered to be attributable to the presence of an NiₓCu₆₋ₓSn₅ layer comprised of Cu₆Sn₅ containing an appropriate amount of Ni (x is 0.30 - 2.0), since it can prevent the active material layer from falling off due to charge-discharge of the battery. However, the present invention is not limited to such assumption. The value of x is preferably 0.4 - 1.8, more preferably 0.6 - 1.5. The value of x can be measured and calculated by the method described in the Examples mentioned below.

The thickness of the NiₓCu₆₋ₓSn₅ layer (x is 0.30 - 2.0) is preferably not less than 0.1 µm, more preferably not less than 1 µm, preferably not more than 100 µm, more preferably not more than 50 µm. When the NiₓCu₆₋ₓSn₅ layer is too thin, sufficient capacity as a battery may not be obtained. On the other hand, when the NiₓCu₆₋ₓSn₅ layer is too thick, diffusion of Li to the depth of the layer takes time, and an electric current practical for a battery may not be obtained. The thickness of the NiₓCu₆₋ₓSn₅ layer can be measured by the method described in the Examples mentioned below.

In the anode of the present invention, the active material layer preferably further has a Cu₃Sn layer, and the active material layer more preferably consists of an NiₓCu₆₋ₓSn₅ layer (x is 0.30 - 2.0) and a Cu₃Sn layer. The Cu₃Sn layer is present between the current collector layer and the NiₓCu₆₋ₓSn₅ layer.

When the Cu₃Sn layer is present, the thickness thereof is preferably not less than 0.5 µm, more preferably not less than 1 µm, further preferably not more than 10 µm, still more preferably not more than 5 µm. The Cu₃Sn layer is considered to function as a stress relaxing layer for the NiₓCu₆₋ₓSn₅ layer and the current collector. When the Cu₃Sn layer is too thin, the effect of stress relaxation cannot be obtained sufficiently, and the charge-discharge cycle characteristic may not be sufficiently high. On the other hand, when the Cu₃Sn layer is too thick, the part that can be alloyed with Li becomes relatively small, and the energy density of the battery may decrease. The thickness of the Cu₃Sn layer can be measured by the method described in the Example mentioned below.

The current collector layer is generally formed from a metal or alloy having conductivity. Preferred is a metal foil or an alloy foil,'more preferred is a copper foil, and further preferred is an electrolytic copper foil. The thickness of the current collector layer is preferably not less than 1 µm, more preferably not less than 5 µm, further preferably not less than 8 µm, preferably not more than 50 µm, more preferably not more than 30 µm, further preferably not more than 20 µm. When the current collector layer is too thin, the internal resistance of the battery becomes high, and load characteristic of the battery decreases. On the other hand, when the current collector layer is too thick, the volume and weight of the battery become high, and the energy density decreases.

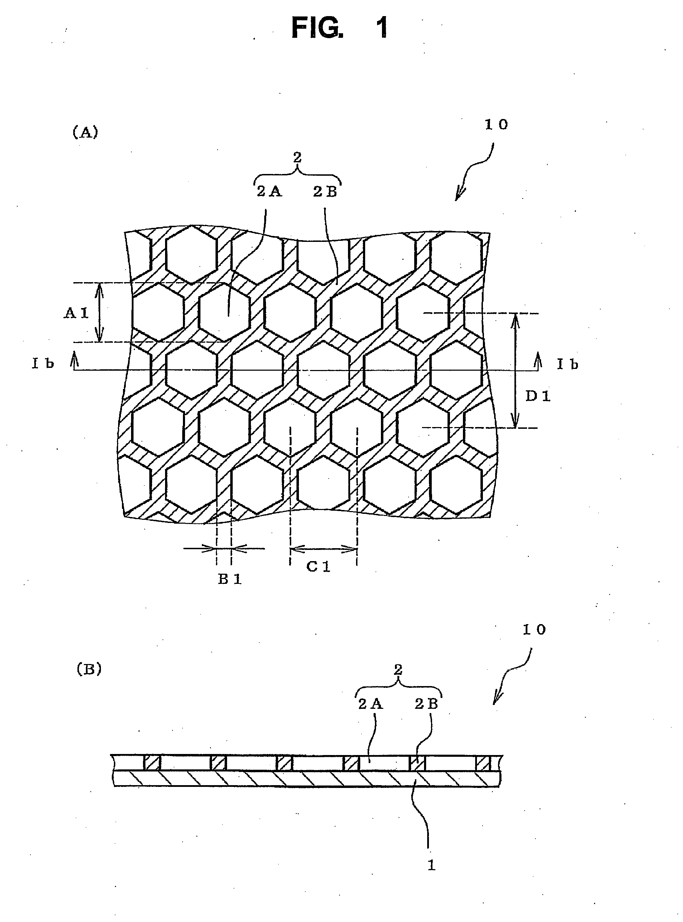

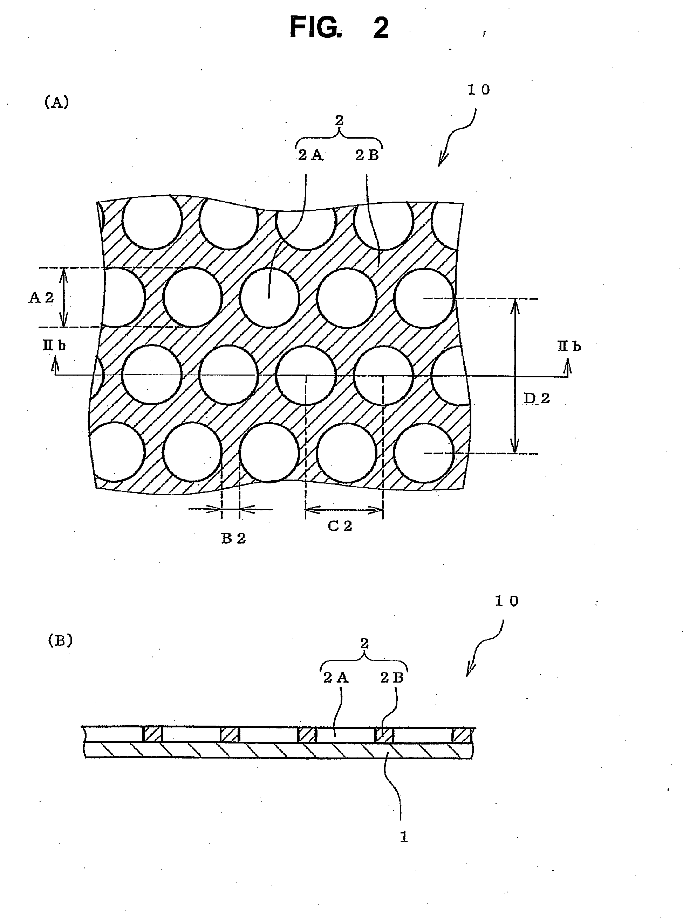

In the anode of the present invention, the current collector layer has a layer structure free of an opening, and the active material layer preferably has a cancellous structure with an opening. Preferable embodiments of the present invention are explained in the following by referring to Figs. 1 and 2.

Fig. 1 is a schematic plane view of the main part of the anode of the lithium secondary battery in preferable embodiment of the present invention (Fig. 1 (A)) and a schematic sectional view thereof (Fig. 1 (B)), Fig. 2 is a schematic plane view of the main part of the anode of the lithium secondary battery in an example useful for an understanding of the present invention (Fig. 2 (A)) and a schematic sectional view thereof (Fig. 2 (B)). Fig. 1 (B) shows a sectional view along the line Ib-Ib in Fig. 1 (A), and Fig. 2 (B) shows a sectional view along the line IIb-IIb in Fig. 2 (A).

In the preferable embodiment of the present invention, the current collector layer 1 does not have an opening. As a result, the current collector layer 1 can maintain its electrical resistance at a low level as well as sufficient intensity.

In the active material layer 2, a network structure has an opening 2A. That is, when the active material layer 2 is seen from the perpendicular direction, plural openings 2A are regularly aligned, and the periphery of the individual openings 2A are covering parts 2B covering the current collector layer 1. Typically, the regular alignment of the openings 2A in the network structure is zigzag alignment, matrix alignment and the like, with preference given to zigzag alignment. In Fig. 1 (A) and Fig. 2 (A), openings 2A are aligned in a zigzag manner.

During charge-discharge of a lithium secondary battery, lithium goes in and out from the active material layer, which causes expansion/contraction of the active material layer. The stress due to the expansion/contraction breaks the active material layer, and charge-discharge capacity may sometimes decrease. On this point, the presence of an opening in the active material layer can prevent breakage of the active material layer due to the expansion/contraction, and can prevent decrease of charge-discharge capacity of the lithium secondary battery.

The shape of the opening in the active material layer in a planar view is a substantially regular polygon of hexagon. In an unclaimed example, the shape of the opening in a planar view is a substantially regular polygon of pentagon or above (other than hexagon) and/or a substantial circle. In the present invention, the "substantially regular polygon" means a polygon wherein the length of the longest side is not more than 1.1 times the length of the shortest side, and includes, besides regular polygons, polygons similar to regular polygons. The length of the longest side of a substantially regular polygon is preferably not more than 1.05 times the length of the shortest side, and the substantially regular polygon is more preferably a regular polygon. The "substantial circle" means an ellipse or oval wherein the major axis thereof (long axis) is not more than 1.1 times the length of the minor axis (short axis), and includes circles. The major axis of the substantial circle is preferably not more than 1.05 times the length of the minor axis, and the substantial circle is more preferably a circle. In Fig. 1 (A), the shape of the opening 2A is a regular hexagon, and in Fig. 2 (A), the shape of the opening 2A is a circle.

When the opening in the active material layer is a substantially regular polygon of pentagon or above and/or a substantial circle, the charge-discharge cycle characteristics of the lithium secondary battery can be improved. While the mechanism thereof is not certain, it is assumed since a substantially regular polygon of pentagon or above has more corners, at which the stress is considered capable of concentrating, the concentration of stress is reduced, and the breakage of the active material layer is further prevented. The substantial circle can be considered to have an infinitely increasing number of corners of the substantially regular polygon, and therefore, even a substantial circle is considered to reduce the stress concentration. However, the present invention is not limited to the presumed mechanism. In an unclaimed example, the substantially regular polygon of pentagon or above is preferably a substantially regular octagon.

The shape of the opening in the active material layer is a substantially regular hexagon. In an unclaimed example, the shape of the opening is preferably at least one selected from the group comprised of a substantially regular octagon and a substantial circle. The shape of the opening is a substantially regular hexagon (particularly a regular hexagon). When the opening of the active material layer is a substantial circle, as shown in Fig. 2 (A), the width of the covering part 2B on the periphery of opening 2A is not uniform, including a wide part and a narrow part. When the opening is a substantially regular hexagon, as shown in Fig. 1 (A), the width of the covering part 2B on the periphery of opening 2A is almost uniform, which enables formation of an active material layer 2 having superior intensity.

It is preferable that the shape of the opening in the active material layer be basically a single shape (namely, plural openings have the same shape). However, two or more kinds of openings having different shapes may also be present. For example, an opening of a substantially regular hexagon and an opening of a substantial circle may be present, and an opening of a substantially regular hexagon and an opening of a substantially regular octagon may be present.

When the size of the opening in the active material layer is too small, the stress due to expansion/contraction of the active material layer cannot be alleviated sufficiently. When the size of the opening is too large, charge and discharge capacity of a lithium secondary battery becomes too small. The longest distance across the corners of the opening, which is a substantially regular polygon (A1 in Fig. 1 (A)), is preferably not less than 1 µm, more preferably not less than 50 µm, still more preferably not less than 100 µm, and preferably not more than 1000 µm, more preferably not more than 900 µm, more preferably not more than 800 µm. In addition, the diameter or long axis (A2 in Fig. 2 (A)) of the opening, which is a substantial circle, is preferably not less than 1 µm, more preferably not less than 50 µm, still more preferably not less than 100 µm, and preferably not more than 1000 µm, more preferably not more than 900 µm, still more preferably not more than 800 µm.

While the size of each opening in the active material layer may be different, the active material layer preferably has uniform property in the entirety thereof. Thus, the maximum length (maximum distance across corners, or diameter or long axis) of the maximum opening in the active material layer is preferably not more than 2.0 times, more preferably not more than 1.5 times, the maximum length (maximum distance across corners, or diameter or long axis) of the minimum opening, wherein each opening more preferably has substantially the same size. That "each opening has substantially the same size" means the difference in the size of each opening is within the range of production error. In actual production, even if the openings are set to the same size, the size dispersion may occur due to a production error.

When the minimum width of the covering part of the active material layer is too small, the active material layer does not adhere sufficiently to the current collector layer, and the active material may drop off after repeated charge and discharge cycles. On the other hand, when the minimum width of the covering part is too large, the stress caused by expansion/contraction of the active material layer cannot be reduced sufficiently. Therefore, the minimum width of the covering part is preferably not less than 1 µm, more preferably not less than 10 µm, still more preferably not less than 20 µm, and preferably not more than 500 µm, more preferably not more than 300 µm, still more preferably not more than 100 µm. Here, "the minimum width of the covering part" means the smallest distance between adjacent two openings (e.g., B1 in Fig. 1 (A), B2 in Fig. 2 (A)).

When, in the active material layer, the area ratio of the covering part relative to the total area including opening and covering part (hereinafter sometimes to be abbreviated as "covering rate") is too small, the charge and discharge capacity of the lithium secondary battery becomes too small. On the other hand, when it is too high, the stress caused by expansion/contraction of the active material layer cannot be reduced sufficiently. Hence, the covering rate is preferably not less than 5 area %, more preferably not less than 10 area %, more preferably not less than 15 area %, and preferably not more than 70 area %, more preferably not more than 65 area %, more preferably not more than 60 area %.

The sheet for the anode of the present invention can be produced by, for example, forming an Ni layer on a copper foil (preferably electrolytic copper foil), then forming an Sn-Cu layer thereon, and heat-treating a copper foil having an Ni layer/Sn-Cu layer. The heat treatment causes diffusion and moved metal components, and on the copper foil (Cu layer), a Cu₃Sn layer and NiₓCu₆₋ₓSn₅ layer can be formed in this order. By adjusting the thickness of the Ni layer formed before heat treatment and the like, the value of the x in the NiₓCu₆₋ₓSn₅ layer can be adjusted.

Examples of the formation method of Ni layer and Sn-Cu layer include electrolytic plating, non-electrolytic plating, sputtering, vapor deposition and the like. Of these, electrolytic plating is preferable. The heat treatment temperature of the copper foil having the Ni layer/Sn-Cu layer is preferably not less than the melting point of Sn (232°C), more preferably 235 - 400°C. The time of the heat treatment is preferably 0.5 - 50 hr.

Preferable sheet for the anode of the present invention having the active material layer which forms an opening and has a cancellous structure can be produced by, for example, forming a resist film that formations of an opening and a covering part are turned around the active material layer, on copper foil by photolithography, forming a Ni layer and Sn-Cu layer thereon, then removing the resist film to form a Ni layer/Sn-Cu layer having an opening, and then by heat-treating copper film having this Ni layer/Sn-Cu layer.

The anode of the present invention can be produced by cutting or punching out a sheet for anode produced as mentioned above to a desired size by a known means.

The present invention further provides a lithium secondary battery containing the above-mentioned anode. The lithium secondary battery of the present invention characteristically contains the above-mentioned anode, and other constitution is not particularly limited. The constitution of the lithium secondary battery and the production method thereof are known and are described, for example, in patent documents 1 and 2 and the like. Examples

The present invention is explained in more detail in the following by referring to Examples. However, the present invention is not limited to the following Examples, and can be practiced by making appropriate modifications and changes without substantially departing from the above or below-mentioned teaching and advantages of the present invention, all of which are encompassed in the technical scope of the present invention.

### Examples 1-4 and Comparative Examples 1 and 2: Production of sheet for anode

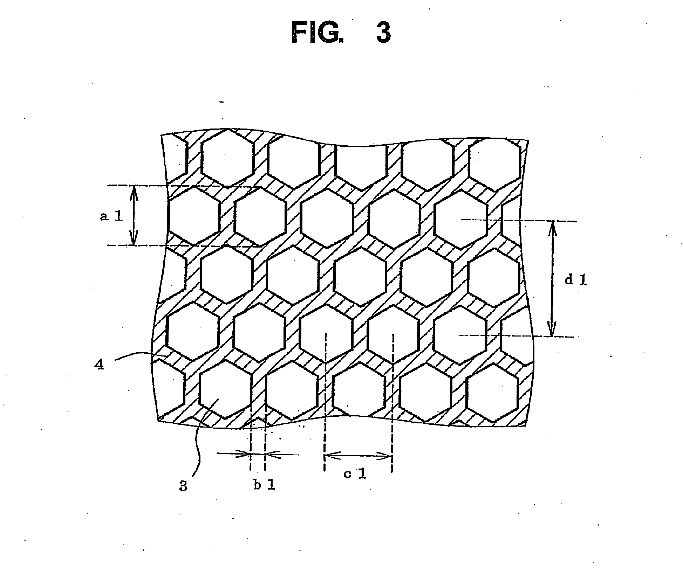

A negative resist film (thickness: 25 µm) was laminated on an electrolytic copper foil (thickness: 20 µm). Using a photomask of the shape shown in Fig. 3 (in Fig. 3, symbol 3 shows a translucent part, and symbol 4 shows a light shielding part, a1: 0.30 mm, b1: 0.05 mm, c1: 0.31 mm, d1: 0.54 mm), the resist film was exposed and developed to form a developed resist film (shape of covering part: regular hexagon) with a pattern inverted to the photomask.

An electrolytic copper foil having a development resist film was immersed in a plating solution (aqueous solution containing nickel sulfate (NiSO₄·6H₂O): 300 g/L, nickel chloride (NiCl_{2·}6H₂O): 50 g/L, boric acid: 40 g/L) to allow electrolytic plating to form an electrolytic copper foil having an Ni plated layer. The electrolytic plating was performed by adjusting the temperature of the plating solution to 50°C, and at a current density of 1 A/dm². The thickness of the Ni plated layer was adjusted by the plating time. Specifically, the electrolytic plating was performed for 5 min to form an Ni plated layer having a thickness of 1 µm (thickness of Ni plated layer/plating time=0.2 µm/min).

The electrolytic copper foil having the Ni plated layer obtained as mentioned above was immersed in a plating solution (aqueous solution containing tin(II) methanesulfonate: 39 g/L, copper(II) methanesulfonate: 6.6 g/L, methanesulfonic acid: 100 g/L, bisphenol: 5 g/L, thiourea: 10 g/L, catechol 1 g/L), and electroplating was carried out to form an Sn-Cu eutectoid plated layer (thickness: 10 µm) on the Ni plated layer. This electroplating was carried out while adjusting the temperature of the plating solution to 40°C for 20 min at current density of 1 A/dm². The electrolytic copper foil having the Sn-Cu eutectoid plated layer was washed with water, and the developed resist film was detached with 3 - 5 wt% NaOH aqueous solution and further washed with water to give an electrolytic copper foil (current collector layer) having the Ni plated layer/the Sn-Cu eutectoid plated layer, wherein regular hexagon openings were aligned in a zigzag manner.

The electrolytic copper foil having the Ni plated layer/Sn-Cu eutectoid plated layer obtained as mentioned above was heat-treated at 250°C for 5 hr under the atmosphere to give a sheet for an anode, which has a Cu₃Sn layer and an NiₓCu₆₋ₓSn₅ layer in this order (A1: 0.30 mm, B1: 0.046 mm, C1: 0.30 mm, D1: 0.52 mm, covering rate: 29 area%) as active material layers shown in Fig. 1(A), on a current collector layer (electrolytic copper foil). The size of each part of the active material layer was calculated from an electron micrograph taken by an electron microscope: "JSM-6390A" manufactured by JEOL.

### Evaluation of charge-discharge-cycle property

### (1) Production of battery

The sheets for anode produced in Examples 1 - 4 and Comparative Examples 1 and 2 were punched out in 16 mmϕ in size, and anodes for evaluation were prepared. The anodes were dried at 70°C for 1 hr under vacuum, and transferred into a glove box under an argon atmosphere. Under an argon atmosphere in the glove box, a 2016 size-coin cell type battery was produced using the anode. As a sheet for a cathode, a sheet having an aluminum foil as a current collector layer and lithium cobalt dioxide as an active material layer was used, and this was punched out in 15 mmφ and used as another side (cathode) of the battery. In addition, as a separator, a fine porous film made of polyethylene (thickness: 25 µm, porosity: 40% by volume, average diameter of void: 0.1 µm) was used and, as an electrolytic solution, a 1.4M LiPF₆ solution (solvent: ethylene carbonate (EC) and diethyl carbonate (DEC), volume ratio of EC:DEC = 1:2) was used.

### (2) Charge and discharge cycle test

The battery produced as mentioned above was placed in a thermostat at 25°C, and charged and discharged 60 cycles in total at the following charge-discharge rates.
(i) 1 time of 5 cycles at 0.2 CmA charge-discharge rate (total 5 cycles)
(ii) 5 times of a combination of 10 cycles at 1 CmA charge-discharge rate, and then 1 cycle at 0.2 CmA charge-discharge rate (total 55 cycles)

In the above-mentioned charge-discharge at 0.2 CmA charge-discharge rate, constant electric current and voltage charging at charge upper limit voltage of 4.0 V and charge completion time of 7 hr was performed (that is, charging to battery voltage of 4.0 V, followed by charging for 7 hr at controlled electric current to maintain the battery voltage of 4.0 V), and constant electric current discharging was performed at discharge completion voltage of 2.5 V (that is, discharging at constant electric current until battery voltage became 2.5 V). A break time for 30 min was set between charging and discharging.

In the above-mentioned charge-discharge at charge-discharge rate of 1 CmA, constant electric current and voltage charging at charge upper limit voltage of 4.0 V and charge completion time of 2 hr was performed, and constant electric current discharging was performed at discharge completion voltage of 2.5 V. A break time for 30 min was set between charging and discharging.

The charge-discharge cycle test was performed as mentioned above, the discharged capacity at the first cycle and the discharged capacity at the 60th cycle were measured, and relative discharged capacity (=100 x discharged capacity at 60th cycles/discharged capacity at the first cycle) was calculated. The results of the relative discharged capacity are shown in Table 1.

Table 1 also describes the thicknesses of the Ni plated layer and Sn-Cueutectoid plated layer formed before a heat treatment, the thickness of the Cu₃Sn layer formed after a heat treatment, the thickness of the NiₓCu₆₋ₓSn₅ layer and the value of x.

The thickness of the Ni plated layer, Sn-Cu eutectoid plated layer, Cu₃Sn layer and NiₓCu₆₋ₓSn₅ layer described in Table 1 was determined by performing FIB microsampling at accelerating voltage 40 kV using Hitachi FB-2100, taking a sectional SEM image of the sample by FE-SEM (manufactured by Joel, JSM-7001F, accelerating voltage 15 kV), and calculating the thickness from the image. In addition, the value of x was measured by calculating the ratio of each element of the NiₓCu₆ₓSn₅ layer by elemental analysis using Field Emission Scanning Electron Microscope-X-ray Micro Analyzer (FE-SEM-XMA) (FE-SEM (manufactured by Joel, JSM-7001F, accelerating voltage 15 kV), XMA (manufactured by Oxford Instruments, Inca Energy 250, energy dispersion type)), and calculating from the ratio.

**Table 1**

| | before heat treatment | | after heat treatment | | | relative discharge capacity |
|---|---|---|---|---|---|---|
| | Ni plated layer | Sn-Cu eutectoid plated layer | Cu₃Sn layer | NiₓCu₆₋ₓSn₅ layer | | |
| | thickness (µm) | thickness (µm) | thickness (µm) | thickness (µm) | x value | |
| Ex.1 | 0.25 | 10 | 3.0 | 10 | 0.46 | 91 |
| Ex.2 | 0.5 | 10 | 3.3 | 10 | 0.74 | 96 |
| Ex.3 | 0.75 | 10 | 3.5 | 10 | 1.0 | 95 |
| Ex.4 | 1.0 | 10 | 4.0 | 10 | 1.8 | 90 |
| Com. Ex.1 | 0.1 | 10 | 2.0 | 10 | 0.28 | 72 |
| Com. Ex.2 | 1.5 | 10 | 4.0 | 12 | 2.2 | 76 |

| | | | | | | |
|---|---|---|---|---|---|---|
| current collector layer: electrolytic copper foil active material layers: Cu₃Sn layer and NiₓCu₆₋ₓSn₅ layer | | | | | | |

As is clear from Table 1, the batteries using the anode of the present invention (Examples 1 - 4) having an NiₓCu₆₋ₓSn₅ layer (x is 0.30 - 2.0) show superior relative discharged capacity as compared to the anode having an NiₓCu₆₋ₓSn₅ layer (x is less than 0.30) (Comparative Example 1) and the anode having an NiₓCu₆₋ₓSn₅ layer (x is more than 2.0) (Comparative Example 2).

## Claims

1. An anode or a sheet for an anode for a lithium secondary battery comprising a current collector layer (1) and an active material layer (2) laminated on the current collector layer (1), wherein the active material layer (2) has a layer comprised of NiₓCu₆₋ₓSn₅ (x is 0.30 - 2.0), **characterised in that** the current collector layer (1) has a laminar structure without an opening, the active material layer (2) has a network structure with an opening (2A), and the shape of the opening (2A) in a planar view is a regular polygon of hexagon.

2. The anode or the sheet for an anode according to claim 1, wherein the active material layer (2) further has a layer comprised of Cu₃Sn, which is present between a current collector layer (1) and a layer comprised of NiₓCu₆₋ₓSn₅ (x is 0.30 - 2.0).

3. The anode or the sheet for an anode according to claim 2, wherein the current collector layer (1) is a copper foil.

4. A lithium secondary battery comprising the anode according to claims 1 to 3.

## Patentansprüche

1. Anode oder Blech für eine Anode für einen Lithium-Ionen-Akkumulator, der eine Stromabnehmerschicht (1) und eine auf die Stromabnehmerschicht (1) laminierte Schicht aus aktivem Material (2) umfasst, wobei die Schicht aus aktivem Material (2) eine Schicht aufweist, die aus NiₓCu₆₋ₓSn₅ besteht (wobei x = 0,30 bis 2,0 ist), **dadurch gekennzeichnet, dass** die Stromabnehmerschicht (1) eine Blätterstruktur ohne Öffnung aufweist, die Schicht aus aktivem Material (2) eine Netzwerkstruktur mit einer Öffnung (2A) aufweist und die Form der Öffnung (2A) in einer planaren Ansicht ein regelmäßiges Sechseck ist.

2. Anode oder Blech für eine Anode gemäß Anspruch 1, wobei die Schicht aus aktivem Material (2) weiterhin eine aus Cu₃Sn bestehenden Schicht aufweist, die sich zwischen einer Stromabnehmerschicht (1) und einer aus NiₓCu₆₋ₓSn₅ (wobei x = 0,30 bis 2,0 ist) bestehenden Schicht befindet.

3. Anode oder Blech für eine Anode gemäß Anspruch 2, wobei die Stromabnehmerschicht (1) eine Kupferfolie ist.

4. Lithium-Ionen-Akkumulator, der die Anode gemäß den Ansprüchen 1 bis 3 umfasst.

## Revendications

1. Anode ou feuille pour anode destinée à une pile rechargeable au lithium, comprenant une couche de collecteur de courant (1) et une couche de matériau actif (2) stratifiée sur la couche de collecteur de courant (1), dans laquelle la couche de matériau actif (2) comporte une couche composée de NiₓCu₆₋ₓSn₅ (x va de 0,30 à 2,0), **caractérisée en ce que** la couche de collecteur de courant (1) possède une structure stratifiée sans ouverture, la couche de matériau actif (2) possède une structure en réseau avec une ouverture (2A) et la forme de l' ouverture (2A) dans une vue en plan est un polygone ou un hexagone régulier.

2. Anode ou feuille pour anode selon la revendication 1, dans laquelle la couche de matériau actif (2) comporte en outre une couche composée de Cu₃Sn qui est présente entre une couche de collecteur de courant (1) et une couche composée de NiₓCu₆₋ₓSn₅ (x va de 0, 30 à 2, 0).

3. Anode ou feuille pour anode selon la revendication 2, dans laquelle la couche de collecteur de courant (1) est une feuille de cuivre.

4. Pile rechargeable au lithium comprenant l'anode selon les revendications 1 à 3.
